# EUROPÄISCHE PATENTSCHRIFT

(11) **EP 3 240 766 B1**
(45) Veröffentlichungstag und Bekanntmachung des Hinweises auf die Patenterteilung: **01.05.2019**
(21) Anmeldenummer: 16714301.5
(22) Anmeldetag: 21.03.2016
(51) Int. Cl.: C04B 35/56, C04B 35/653, B22F 3/105, B28B 1/00, B29C 67/00

(54) **VERFAHREN ZUR HERSTELLUNG EINES BAUTEILS AUS MAX-PHASEN**
METHOD FOR PRODUCING A COMPONENT FROM MAX PHASES
PROCÉDÉ DE FABRICATION D'UNE PIÈCE EN PHASES MAX

(30) Priorität: 31.03.2015 DE 102015205787
(43) Veröffentlichungstag der Anmeldung: 08.11.2017
(73) Patentinhaber: Siemens Aktiengesellschaft, 80333 München (DE)
(72) Erfinder: DEPKA, Timo, 44801 Bochum (DE); FLORES RENTERIA, Arturo, 12161 Berlin (DE); LAUX, Britta, 14059 Berlin (DE); OTT, Michael, 45470 Mülheim an der Ruhr (DE); PIEGERT, Sebastian, 03222 Lübbenau (DE)
(86) Internationale Anmeldenummer: PCT/EP2016/056100
(87) Internationale Veröffentlichungsnummer: WO 2016/156082

(56) Entgegenhaltungen:
- EP-A1- 2 589 449
- PASUMARTHI V ET AL: "Reaction synthesis of Ti3SiC2 phase in plasma sprayed coating", JOURNAL OF ALLOYS AND COMPOUNDS, ELSEVIER SEQUOIA, LAUSANNE, CH, Bd. 484, Nr. 1-2, 18. September 2009 (2009-09-18), Seiten 113-117, XP026586408, ISSN: 0925-8388, DOI: 10.1016/J.JALLCOM.2009.04.079 [gefunden am 2009-04-23]
- "Tip-Reparatur Mittels Neuer Schaufelspitze Aus Einer MAX-Phasen-Keramik", PRIOR ART PUBLISHING, 2. September 2014 (2014-09-02), XP040638421, DOI: http://dx.doi.org/10.4421/PAPDEOTT003395

## Beschreibung

Die Erfindung betrifft ein Verfahren zur Herstellung von MAX-Phasen mittels eines additiven Herstellungsverfahrens. MAX-Phasen sind stöchiometrische Phasen, welche von den Eigenschaften zwischen Metallen und Keramiken einzuordnen sind. Auf der einen Seite (metallisch) zeigen sie gute Wärmeleitfähigkeit und hohe Thermoschockresistenz, auf der anderen Seite (keramisch) eine außerordentliche Steifigkeit, Korrosionsresistenz, hohe Abriebfestigkeit sowie eine geringe Dichte. Darüber hinaus weisen bestimmte MAX-Phasen selbst bei 1473K - 1573K noch signifikante Kriech- und Ermüdungsfestigkeit auf.

Diese Eigenschaften machen die MAX-Phasen für Hochtemperaturanwendungen wie in Gasturbinen interessant. So können Schaufelspitzen mit MAX-Phasen rekonditioniert und gepanzert werden. Die geringe Dichte und die Festigkeiten bei hohen Temperaturen lassen aber auch die Anwendung als Schaufelwerkstoffe sinnvoll erscheinen.

V. Pasumarthi et al. offenbart ein Verfahren zur Herstellung von MAX-Phasen [Ti₃SiC₂] mittels Plasma Spritzen, wobei die Korngrößen des Pulvers bei 40-50 µm liegen (Journal of Alloys and Compounds 484 (2009), 113-117).

Bisherige Herstellrouten sind:
1. Synthetisieren über heißisostatisches Pressen der pulverförmigen Grundbestandteile (Übergangsmetall + Element der Gruppe A + Kohlenstoff/Stickstoff) → aus dem Festkörper wird dann spanend ein Werkstück erzeugt → Limits in Größe und Form.
2. Dreischrittprozess der aus einem nach 1. hergestellten Pulver der korrekten stöchiometrischen Zusammensetzung: 3D Drucken eines Grünkörpers (MAX-Phase + Binder) + kaltisostatisches Pressen + Sintern → noch komplexere Route, um das Pulver zu erzeugen + komplexe Dreischritttechnik, um die finale Formgebung zu gewährleisten.

Die Formgebung der MAX-Phasen in Komponenten sowie die Herstellung ist aufwändig und umständlich.

Es ist daher Aufgabe der Erfindung oben genanntes Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es wird vorgeschlagen, die MAX-Phasen mittels Selective Laser Melting (SLM) endkonturnah oder in Endkontur herzustellen.

Dies kann über zweierlei Routen erfolgen:
1) mittels gemischter Pulver der Einzelkomponenten der MAX-Phase oder
2) mittels Pulver mit der richtigen Stöchiometrie der MAX-Phase.

Die Prozessdaten für den Herstellprozess mittels SLM Prozess lauten für die MAX-Phasen, speziell aber für Ti₃SiC₂ und Cr₂AlC:
Korngröße des Pulvers liegt bei 10µm-60µm, entweder gasverdüst oder gemahlen.

Als mögliches Prozessfenster wird vorgeschlagen: Scangeschwindigkeit: 400 - 2000 mm/s, bevorzugt 1000 - 1500mm/s
Leistung: 80 - 250W, bevorzugt 100-170W
Spotgröße: 30 - 300µm.

Insbesondere wird als Energiestrahl ein Laser verwendet.

Die Verarbeitung der Legierung unter Schutzgas führt zu einem geringen Sauerstoff-Anteil in der Matrix.

## Patentansprüche

1. Verfahren
zur Herstellung eines Bauteils aus MAX-Phasen, insbesondere aus Ti₃SiC₂ und/oder Cr₂AlC,
bei dem ein additives Herstellungsverfahren verwendet wird, bei dem Pulver schichtweise aufgetragen und verdichtet wird,
wobei die Korngrößen des Pulvers bei 10µm bis 60µm liegen, bei dem die Scangeschwindigkeit zwischen des Energiestrahls des Lasers oder Elektronenstrahls und Substrat mit Pulver zwischen 400mm/s und 2000mm/s liegt,
insbesondere bei 1000mm/s bis 1500mm/s,
bei dem die Leistung zwischen 80W und 250W beträgt, insbesondere 100W bis 170W beträgt,
bei dem eine Spotgröße des Energiestrahls zwischen 30µm und 300µm liegt.

2. Verfahren nach Anspruch1,
bei dem das Pulver durch Gasverdüsung hergestellt worden ist.

3. Verfahren nach Anspruch 1,
bei dem das Pulver durch einen Mahlprozess hergestellt wurde.

4. Verfahren nach einem oder mehreren der vorhergehenden Ansprüche,
bei dem das Verfahren unter Schutzgasatmosphäre durchgeführt wird.

## Claims

1. Method
for producing a component from MAX phases,
in particular from Ti₃SiC₂ and/or Cr₂AlC,
in which an additive manufacturing process is used,
in which powder is applied layer by layer and densified,
the grain sizes of the powder lying at 10 µm to 60 µm,
in which the scanning speed between the energy beam of the laser or electron beam and substrate with powder lies between 400 mm/s and 2000 mm/s,
in particular at 1000 mm/s to 1500 mm/s,
in which the power output is between 80 W and 250 W,
in particular is 100 W to 170 W,
in which a spot size of the energy beam lies between 30 µm and 300 µm.

2. Method according to Claim 1,
in which the powder has been produced by gas atomization.

3. Method according to Claim 1,
in which the powder has been produced by a grinding process.

4. Method according to one or more of the preceding claims,
in which the method is carried out under a shielding gas atmosphere.

## Revendications

1. Procédé de fabrication d'une pièce en phases MAX, notamment en Ti₃SiC₂ et/ou en Cr₂AlC,
dans lequel on utilise un procédé de fabrication additif,
dans lequel on dépose et on comprime de la poudre couche par couche,
dans lequel la granulométrie de la poudre va de 10µm à 60µm,
dans lequel la vitesse de balayage entre le faisceau d'énergie du laser ou le faisceau d'électrons et le substrat ayant la poudre est comprise entre 400mm/s et 2000mm/s,
en allant notamment de 1000mm/s à 1500 mm/s,
dans lequel la puissance est comprise entre 80W et 250W,
en allant notamment de 100W à 170W,
dans lequel une dimension de la tache du faisceau d'énergie est comprise entre 30µm et 300µm.

2. Procédé suivant la revendication 1,
dans lequel la poudre a été préparée par pulvérisation en phase gazeuse.

3. Procédé suivant la revendication 1,
dans lequel la poudre a été préparée par une opération de broyage.

4. Procédé suivant l'une ou plusieurs des revendications précédentes,
dans lequel on effectue le procédé sous une atmosphère de gaz protecteur.
